# FASCICULE DE BREVET EUROPEEN

(11) **EP 2 796 798 B1**
(45) Date de publication et mention de la délivrance du brevet: **04.10.2017**
(21) Numéro de dépôt: 13305550.9
(22) Date de dépôt: 26.04.2013
(51) Int. Cl.: F28F 9/013, F28D 1/053, F28F 1/12, H05B 3/22, H05B 3/42, F28D 21/00, F24D 19/04, F24D 12/02, F28D 1/02

(54) **Plinthe chauffante hydraulique et/ou électrique**
Hydraulisch und/oder elektrisch beheizte Sockelleiste
Hydraulic and/or electrical baseboard heater

(43) Date de publication de la demande: 29.10.2014
(73) Titulaire: ECO-MATIC (Société à responsabilité limitée), 67550 Vendenheim (FR)
(72) Inventeur: Hullar, Fabien, 67550 Vendenheim (FR)
(74) Mandataire: Nuss, Laurent

(56) Documents cités:
- WO-A1-2011/033138
- CH-A5- 574 091
- DE-U1- 8 809 545
- DE-U1- 29 622 101
- DE-U1-202007 016 216
- FR-A1- 2 394 031
- GB-A- 993 170
- US-A- 3 391 731

## Description

La présente invention relève du domaine des équipements de chauffage et a pour objet un dispositif de chauffage particulier, destiné à former une plinthe chauffante dans une installation de chauffage domestique.

Une plinthe chauffante se distingue d'un radiateur notamment par sa forme géométrique, qui prend celle d'un élément allongé, ce qui permet d'en installer plusieurs les unes derrières les autres dans le bas d'un mur, pour obtenir un chauffage sur tout la largeur d'une paroi, et non de façon localisée comme avec un radiateur. Une plinthe chauffante présente aussi généralement un corps creux dans lequel s'étend l'élément chauffant, ce dernier étant alors masqué.

Une telle plinthe chauffante peut fonctionner avec l'énergie thermique provenant d'un module électrique et/ou provenant d'une circulation d'eau chaude.

Des plinthes fonctionnant avec un module électrique présentent l'avantage d'un branchement simple, d'un contrôle précis et d'une bonne réactivité thermique, et permettent aussi, le cas échéant de contrôler spécifiquement chaque tronçon d'une installation linéaire comprenant plusieurs plinthes montées les unes après les autres.

Les plinthes dites mixtes fonctionnent avec les deux sources d'énergie. Dans ce domaine, EP0176478 et EP0831282 divulguent une plinthe qui présente un échangeur à ailettes, dans lequel circulent deux tuyaux pour le réseau d'eau chaude, ainsi qu'une cartouche électrique. Dans certaines autres réalisations, la cartouche électrique chauffante est simplement glissée dans un tube autrement dédié à la circulation d'eau, comme par exemple dans GB1138375 ou encore US4097720.

EP 1271063 ou encore WO 9858222 divulguent ainsi une plinthe chauffante où des canalisations d'eau circulent au sein d'un échangeur à base d'ailettes. Le document CH 574091 A5 concerne un convecteur de forme allongée comprenant un tube central s'étendant longitudinalement dans le convecteur en traversant une structure de convection avec des ailettes orientées perpendiculairement à l'axe dudit tube.

Les tuyaux qui traversent les ailettes de l'échangeur perturbent cependant l'écoulement d'air dans le corps creux, surtout dans les cas où la plinthe comprend non seulement des tubulures pour circuit hydraulique mais aussi un élément chauffant électrique placé de façon similaire. Cette perturbation peut alors mener à un flux d'air significativement réduit.

Le document US 3 391 731 A concerne un échangeur de chaleur en aluminium adapté pour être installé le long d'un mur. L'échangeur, qui comprend une section radiante et une section de convection, est réalisé par extrusion. Il comprend, d'une part, un fond, formant la face arrière, sur la face externe duquel est intégré un échangeur à ailettes et, d'autre part, des tubulures dont l'une des faces est formée par la face interne du fond. A l'état installé l'échangeur à ailettes est situé entre le fond et le mur à distance de ce dernier. En outre, l'une des faces des tubulures, formant la face avant, opposée à celle formée par le fond, s'étend vers le haut par une paroi supérieure perpendiculaire au fond et qui vient en butée contre le mur avec fixation dans ce dernier.

Toutefois un tel échangeur divulgué dans le document US 3 391 731 A génère des bruits, lors du fonctionnement, dus à la dilatation thermique des tubulures qui déforment l'échangeur à ailette venant de matière avec ces dernières.

Le document DE 88 09 545 U1 a pour objet un radiateur avec, à l'arrière, au moins une surface de chauffe composée de deux demi-coquilles formant deux tubulures haute et basse et, à l'avant, une surface de panneau. Le radiateur comprend en outre, entre la surface frontale de chauffe et la surface de panneau, un convecteur ou échangeur.

Cependant, un tel radiateur divulgué dans le document DE 88 09 545 U1 constitue un point de diffusion de chaleur au milieu d'un mur et la chaleur émise par le radiateur a tendance à monter au dessus du radiateur sans se diffuser efficacement dans les espaces latéraux à gauche et à droite de ce dernier, ce qui ne permet pas d'obtenir une source de chaleur continue en répartissant la diffusion de chaleur sur toute la largeur du mur. En outre, un tel radiateur génère des bruits de fonctionnement dus à la dilatation thermique des tubulures et ne permet pas un accès aisé aux éléments du radiateur et un démontage aisé et rapide des éléments, notamment des tubulures.

Le document WO 2011/033138 A1 divulgue un élément chauffant modulaire comprenant, depuis l'avant vers l'arrière, successivement, une face avant, une plaque centrale intégrant deux conduits et des ailettes formant un échangeur à ailettes fixé sur la face avant. La face avant se prolonge, par son bord supérieur, vers l'arrière par une partie se terminant par un bord de fixation permettant la fixation de l'élément à la paroi mural.

Toutefois, en fonctionnement, les dilatations thermiques des conduits ont tendance à déformer la plaque, ce qui génère des bruits.

Le document FR 2 394 031 concerne un appareil de chauffage adapté pour être monté sous la forme d'une plinthe le long des murs d'une pièce et comprend un carter en alliage d'aluminum constitué par une plaque verticale intégrant deux conduits supérieur et inférieur venus de matière avec ladite plaque et un profilé en forme d'échelle s'étendant verticalement entre les deux conduits qui traversent longitudinalement les parties supérieure et inférieure dudit profilé. Le profilé comporte des volumes internes prévus pour recevoir des conducteurs électriques en servant de support à ces derniers.

Toutefois, avec un appareil du type de celui décrit dans le document FR 2 394 031, d'une part, les conduits se trouvent dans le plan du profilé en traversant longitudinalement sa partie supérieure ou inférieure, ce qui ne permet pas d'obtenir un écoulement d'air dans le corps creux qui n'est pas perturbé ou réduit le long de l'échangeur et, d'autre part, la dilatation thermique des deux conduits entraînent une déformation de la plaque du carter venue de matière avec les conduits, ce qui génère des bruits et des nuisances.

En outre, d'un point de vue industriel, il est particulièrement intéressant d'avoir une architecture peu onéreuse et commune pour des plinthes chauffantes hydrauliques, des plinthes chauffantes électriques ou des plinthes chauffantes mixtes, en particulier au niveau de l'échangeur.

La présente invention a pour but d'améliorer les plinthes chauffantes existantes comme développé ci-dessus, et propose ainsi plus particulièrement de placer les éléments chauffants, à savoir tubulures d'eau et/ou module électrique, au sein du corps creux, mais à l'extérieur de l'échangeur à ailettes en étant placés contre lui.

A cet effet, l'invention a pour objet un dispositif de chauffage mural, de forme allongée et constituant une plinthe chauffante, ledit dispositif comprenant un corps creux qui présente, d'une part, un fond destiné à venir contre le mur sur lequel le dispositif est monté, et, d'autre part, située en vis-à-vis, une façade, ledit dispositif comprenant, en outre un échangeur à ailettes ainsi que deux tubulures, pour la circulation de liquide de chauffage dans un sens chacune.

Ce dispositif est caractérisé en ce que les tubulures se trouvent entre l'échangeur et la façade et en ce qu'il comprend, en outre, au moins une paire de socles de fixation de tubulure, entre lesquels se trouve l'échangeur, et dans lesquels les tubulures viennent se fixer par encliquetage de leur section.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

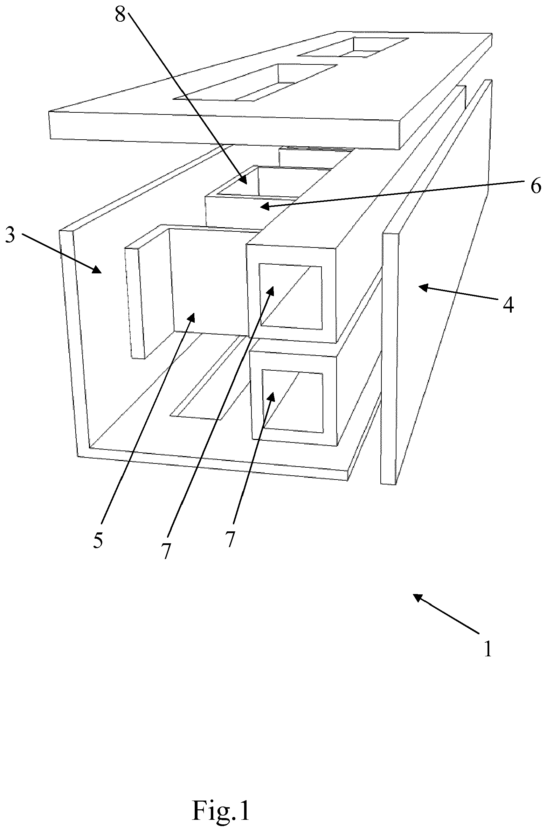

- la figure 1 présente une vue d'une plinthe chauffante ouverte, fonctionnant avec une source de chaleur d'origine hydraulique ;

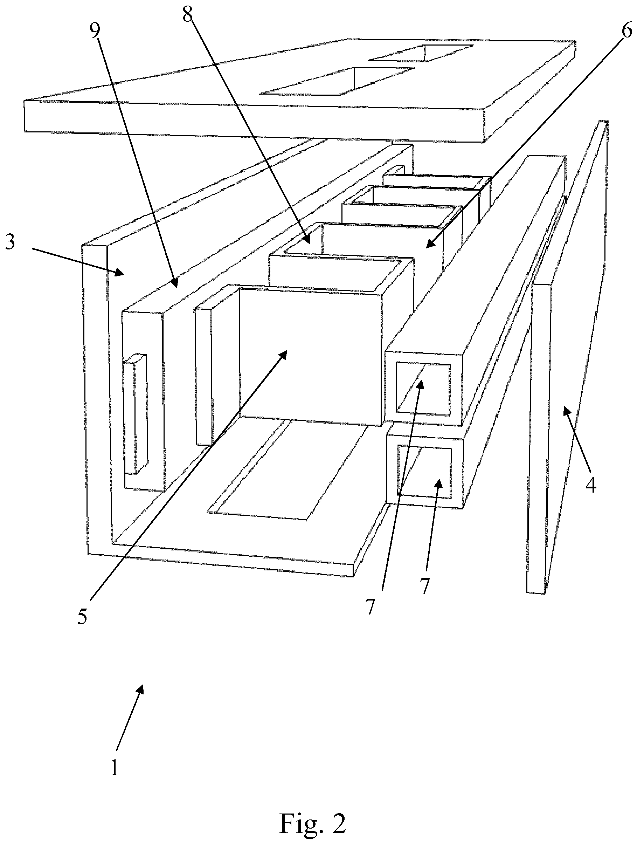

- la figure 2 montre une plinthe mixte éclatée, vue depuis le côté ;

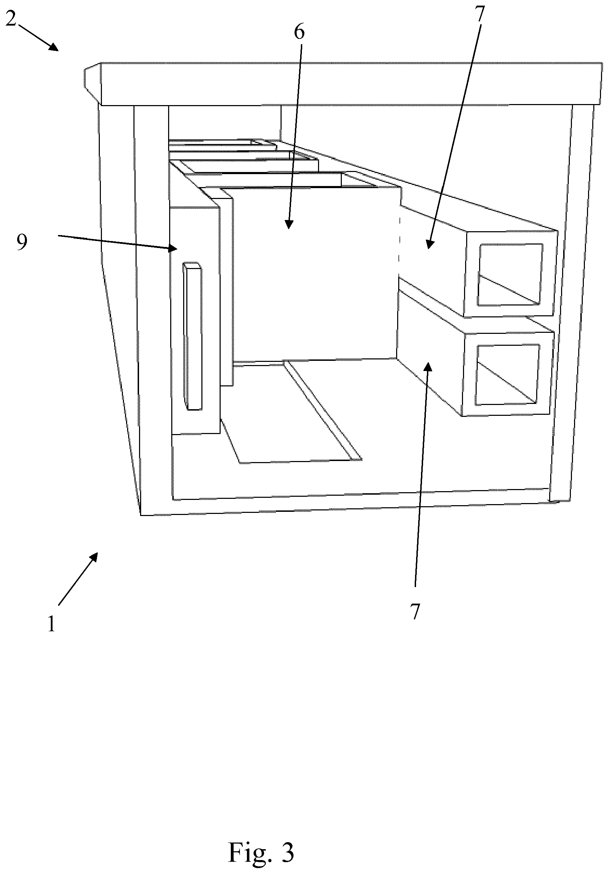

- la figure 3 montre une plinthe mixte avec les parois frontale et supérieure fermées, et

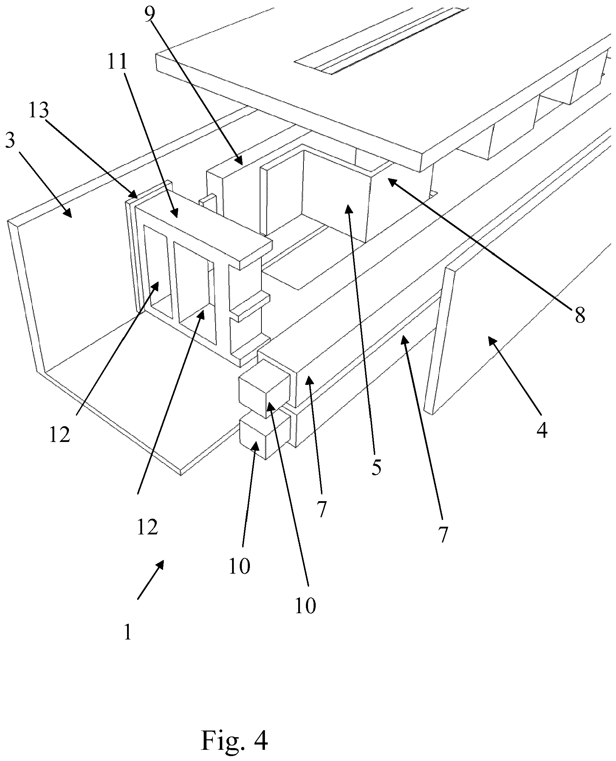

- la figure 4 montre une plinthe mixte partiellement démontée, avec les supports pour tubes et les adaptateurs de branchement au circuit hydraulique.

L'invention a pour objet un dispositif de chauffage mural 1, de forme allongée et constituant une plinthe chauffante, ledit dispositif comprenant un corps creux 2 qui présente, d'une part, un fond 3 destiné à venir contre le mur sur lequel le dispositif est monté, et, d'autre part, située en vis-à-vis, une façade 4, ledit dispositif comprenant, en outre un échangeur 5 à ailettes 6 ainsi que deux tubulures 7, pour la circulation de liquide de chauffage dans un sens chacune.

Le dispositif de chauffage mural 1 est destiné à être placé dans le bas d'un mur vertical, et plusieurs sont normalement placés les uns à la suite des autres pour former, dans le bas des murs d'un local, une source de chaleur continue. Une installation de chauffage à base de radiateurs classique forme plutôt, par comparaison, un ensemble de sources de chaleur ponctuelles dans les pièces d'une habitation.

Le dispositif de chauffage 1 est normalement posé en saillie contre une paroi, ou partiellement encastré et son aspect extérieur est celui d'un profilé du type goulotte ou autre, les sources de chaleur étant généralement masquées à l'intérieur d'un corps creux 2 qui définit les contours extérieurs du dispositif de chauffage 1. La partie arrière du dispositif de chauffage 1, c'est-à-dire le fond 3, sert au moins à fixer le dispositif 1 au mur, et la paroi opposée, généralement parallèle au fond 3, se trouve donc être finalement visible une fois le dispositif 1 installé.

Le chauffage est réalisé par rayonnement à partir des parois extérieures du dispositif de chauffage 1, mais aussi par chauffage de l'air circulant verticalement, par effet de densité, dans le dispositif de chauffage mural 1. Le corps creux 2 présente ainsi des ouvertures dans sa partie basse, pour que de l'air puisse entrer dans le corps creux 2, ainsi que des ouvertures dans sa partie haute, pour que l'air chauffé puisse s'échapper. L'air qui circule est chauffé dans le corps creux 2, grâce à un échangeur 5 à ailettes 6, autour desquelles l'air peut circuler. Les ailettes 6 sont donc verticales une fois le dispositif normalement installé.

Deux tubulures 7 circulent dans le corps creux 2, l'une d'elle, préférentiellement sous la forme d'un seul tube, formant l'arrivée d'eau chaude, l'autre, préférentiellement aussi sous la forme d'un seul tube, formant la sortie d'eau du dispositif.

Selon l'invention, les tubulures 7 se trouvent entre l'échangeur 5 et la façade 4, ce qui permet notamment de faciliter la fabrication de l'échangeur 5, puisqu'il n'est pas nécessaire d'y aménager des orifices de passage pour les tubulures, mais aussi de ne pas perturber un écoulement d'air contre les ailettes 6 de l'échangeur 5, puisque l'espace entre les ailettes 6 est totalement dégagé.

Les tubulures 7 sont avantageusement linéaires et faites de métal, comme du cuivre ou du laiton, et la surface de leur section intérieure fait entre 180 et 280 millimètres carrés, et avantageusement environ 230 millimètres carrés. Une telle section intérieure, plus grande que dans les plinthes chauffantes classiques, facilite entre autres le réglage de l'installation hydraulique, puisque les pertes de charge sont significativement réduites.

Selon une caractéristique additionnelle possible, les tubulures 7 sont en contact, d'une part, avec l'échangeur 5, et, d'autre part, avec la façade 4, ce contact amenant une circulation d'énergie par conduction qui améliore, d'une part, l'échange de chaleur entre les tubulures 7 et l'échangeur 5, pour que ce dernier puisse à son tour échanger davantage de chaleur à l'air qui circule contre ses ailettes 6, et, d'autre part, l'échange de chaleur entre les tubulures 7 et la façade 4, cette dernière pouvant ensuite fournir à l'extérieur une énergie par rayonnement.

L'échangeur 5 présente un ensemble d'ailettes 6 qui se retrouvent perpendiculaires au fond 3 et verticales une fois le dispositif normalement installé. Ces ailettes 6 son reliées entre elles par des flancs 8 de matière qui se retrouvent alors parallèles au mur et donc aussi au fond 3 et à la façade 4. C'est contre ces flancs 8 que les tubulures 7 viennent en contact, la chaleur qu'elles apportent étant ensuite propagée perpendiculairement dans l'ensemble des ailettes 6. L'apport de chaleur des tubulures 7 aux ailettes 6 est donc d'autant plus intense que ces flancs 8 sont de grande superficie.

Selon une autre caractéristique additionnelle possible, les tubulures 7 ont deux faces planes en vis-à-vis l'une de l'autre, l'une pour le contact avec l'échangeur 5, l'autre pour le contact avec la façade 4, ce qui augmente la quantité de chaleur échangée par conduction par les tubulures 7. Ces faces planes se retrouvent parallèles au fond 3 ainsi qu'à la façade 4. Les tubulures 7 présentent donc préférentiellement deux parois parallèles, l'une d'elle venant contre l'échangeur 5, au niveau des flancs 8 joignant les ailettes 6, et l'autre venant au contact de la façade 4. Le contact entre les tubulures 7 et l'échangeur 5 se fait donc avec des surfaces planes, ce qui augmente encore la quantité de chaleur apportée. Le contact plan avec la façade 4 augmente lui aussi la surface d'échange et permet donc aussi d'augmenter l'apport calorique à la façade 4 et donc de favoriser davantage le chauffage par rayonnement.

Les tubulures 7 ont donc préférentiellement une section globalement rectangulaire, avec éventuellement des arrondis dans les angles, pour faciliter notamment la fabrication. Les figures attachées montrent schématiquement une section strictement rectangulaire.

Dans des modes de réalisation particuliers, l'échangeur 5 prend la forme d'une feuille d'un seul tenant déformée pour créer une alternance d'ailettes 6 et de flancs 8 plats, lesdites ailettes 6 étant parallèles entre elles, séparées par lesdits flancs 8 qui leur sont perpendiculaires et qui s'étendent entre elles à leurs extrémités, les tubulures 7 venant contre certains des flancs 8. Une telle géométrie simplifie la construction de l'échangeur 5 et favorise aussi le bon échange avec les tubulures 7 et/ou le module électrique 9 chauffant plat encore décrit plus loin. Ainsi, les flancs 8 situés du côté de la façade 4 assurent l'échange avec la façade 4, alors que les flancs 8 situés du côté opposé, à savoir du côté du fond 3, servent, le cas échéant, à un échange de chaleur avec le module électrique 9 chauffant qui sera encore décrit plus loin.

L'échangeur 5 est préférentiellement obtenu à partir d'une feuille de métal, du type cuivre, aluminium, laiton ou autre. Comme les tubulures 7 ne traversent pas l'échangeur 5 mais s'étendent contre lui, la fabrication de l'échangeur 5 est simplifiée. En outre, dans des applications où le dispositif de chauffage 1 apporte de l'énergie thermique aussi grâce à un module électrique 9, ce dernier est préférentiellement placé contre le fond 3 du corps creux 2, l'échangeur 5 étant ensuite placé contre ledit module.

Une partie des flancs 8 peut donc servir de partie de fixation de l'échangeur 5 contre le fond 3 ou contre un module électrique 9 chauffant plat disposé contre ledit fond 4. L'autre partie des flancs 8 sert à l'échange avec les tubulures 7.

Selon une autre caractéristique additionnelle possible, le dispositif présente, à chaque extrémité des tubulures 7, des adaptateurs 10 pour le montage d'un flexible de raccordement, lesdits adaptateurs 10 étant montés à l'intérieur des tubulures 7. Le flexible de raccordement est ainsi destiné à relier deux dispositif de chauffage successifs.

Le montage de l'adaptateur 10 à l'intérieur des tubulures 7 permet en particulier de garantir que la surface extérieure plane des tubulures 7 linéaires peut venir contre la façade 4 et/ou contre l'échangeur 5. Il présente avantageusement, à une extrémité, une section complémentaire à l'intérieur de la tubulure 7, et donc essentiellement rectangulaire, et, à l'autre extrémité, une section circulaire pour le montage d'un flexible de raccordement du marché, à section circulaire.

Selon une autre caractéristique additionnelle possible, la façade 4 est formée par une paroi à base métallique, ce qui en favorise le chauffage et le rayonnement de la façade 4 vers l'environnement. Préférentiellement, la façade 4 est réalisée avec un alliage à base d'aluminium.

Le dispositif comprend, en outre, au moins une paire de socles 11 de fixation de tubulure 7, entre lesquels se trouve l'échangeur 5, et dans lesquels les tubulures 7 viennent se fixer par encliquetage de leur section.

Les socles 11 sont donc fixés contre le fond 3, et la tubulure 7 y est placée par encliquetage. Le recours à une tubulure de section globalement rectangulaire permet alors aussi de faciliter la fixation par encliquetage, puisque, à section égale, la hauteur du crochet d'encliquetage est plus faible et la profondeur de prise est plus grande. L'insertion des tubulures 7 dans les socles 11 se fait perpendiculairement au fond 3, de sorte que l'encliquetage se fait donc bien en coopérant avec une section de la tubulure 7. La prise dans l'encliquetage des supports 11 maintient donc la tubulure 7 perpendiculairement au fond 3, et, le support 11 accueille préférentiellement la section de la tubulure 7 au niveau d'une zone géométrique complémentaire, avec un léger jeu. Ainsi, même après montage de la tubulure 7 dans le support 11, ce jeu garantit qu'elle reste déplaçable dans le sens de son axe. Les dilatations thermiques de la tubulure 7 sont donc librement possibles, et ne créent pas de tension mécanique sur les supports 11.

Chaque socle 11 présente notamment aussi des ouvertures 12 pour en réduire la rigidité et faciliter ainsi l'absorption des déformations thermiques.

Selon une autre caractéristique additionnelle possible, le dispositif de chauffage mural 1 comprend, en outre, au moins une paire de socles 11 de fixation de tubulure 7, entre lesquels se trouve l'échangeur 5, et dans lesquels les tubulures 7 viennent se fixer par encliquetage de leur section. L'échangeur 5 se trouve donc entre deux socles 11, ces derniers étant placés contre le fond 3.

Dans des modes de réalisation particuliers, le socle 11 est fixé dans le corps creux 2 contre son fond 3, par une fixation décrochable 13 à base de boucles et crochets, aussi connue sous la marque VELCRO, ce qui facilite sa fixation, son démontage et sa maintenance, mais qui permet aussi d'avoir une fixation légèrement déformable pour supporter les dilations thermiques en cours d'utilisation.

La fixation de la tubulure 7 dans le corps creux 2, et plus particulièrement contre le fond 3, présente donc toute la souplesse nécessaire pour que la partie dans laquelle est prise la tubulure 7 puisse se déplacer au moins légèrement pour suivre les dilatations et/ou contractions thermiques de la tubulure 7.

Une des deux parties de la fixation par boucles et crochets est donc placée contre le fond 3, l'autre étant placée contre la surface du socle 11. Le montage et démontage du support 11 sur le fond 3 est donc rapide et aisé.

La possibilité de déplacement axial des tubulures 7 contribue aussi à réduire les bruits provoqués par leur dilatation thermique.

Dans des modes de réalisation possibles, à savoir les plinthes mixtes, fonctionnant à la fois avec de l'eau chaude et de l'électricité, le dispositif présente, en outre, un module électrique 9 chauffant plat, positionné entre le fond 3 et l'échangeur 5, au contact de chacun d'eux. La présence d'un tel module électrique 9 augmente la quantité d'énergie thermique qu'il est possible de fournir à l'échangeur 5, et éventuellement ce de façon localisée dans l'installation de chauffage. Comme il a déjà été mentionné plus haut, les ailettes 6 sont reliées par des flancs 8, qui s'étendent parallèlement au fond 3. Ce sont certains de ces flancs 8 qui arrivent donc contre le module électrique 9, pour améliorer l'échange thermique. Naturellement, plus la surface de ces flancs 8 est élevée, plus la chaleur qui peut être apportée par le module électrique 9 à l'échangeur 5 est élevée.

Le dispositif de chauffage 1 présente donc, dans le corps creux 2, un empilement du module électrique 9, de l'échangeur 5 et des tubulures 7, le tout venant entre, d'une part, le fond 3 et la façade 4, avec un contact à chaque fois de l'un à l'autre des éléments superposés.

Selon une autre caractéristique additionnelle possible, le module électrique 9 se trouve entre deux socles 11, lesdits socles 11 et le module électrique 9 étant fixés contre le fond 3, les câbles électriques pour la connexion du module électrique 9 s'étendant préférentiellement au coeur de chacun des socles 11, dans le ou des ouvertures 12 qu'il présente.

Dans des réalisations particulières, le dispositif de chauffage mural 1 comprend aussi au moins un élément de sécurité thermique, monté en série dans le circuit électrique du module électrique 9. Cet élément de sécurité thermique ouvre le circuit lorsque sa température est au-delà d'un seuil prédéfini, stoppant ainsi la circulation d'électricité et l'élévation en température du module électrique 9. Une éventuelle surchauffe du module électrique 9 est ainsi évitée, ce qui limite les risques de départ de feu, par exemple, mais aussi les risques de brûlures en cas de contact par un utilisateur. Préférentiellement, le dispositif de chauffage mural 1 présente le nombre d'élément de sécurité thermique nécessaire pour qu'une fois qu'une pluralité de tels dispositifs de chauffage mural 1 sont installés en série les uns à la suite des autres, l'ensemble présente une pluralité d'éléments de sécurité thermique qui sont régulièrement répartis et espacés, notamment distants d'environ trente centimètres.

## Revendications

1. Dispositif de chauffage mural (1), de forme allongée et constituant une plinthe chauffante,
ledit dispositif comprenant un corps creux (2) qui présente, d'une part, un fond (3) destiné à venir contre le mur sur lequel le dispositif est monté, et, d'autre part, située en vis-à-vis, une façade (4),
ledit dispositif comprenant, en outre un échangeur (5) à ailettes (6) ainsi que deux tubulures (7), pour la circulation de liquide de chauffage dans un sens chacune,
dispositif **caractérisé en ce que** les tubulures (7) se trouvent entre l'échangeur (5) et la façade (4) et **en ce qu'**il comprend, en outre, au moins une paire de socles (11) de fixation de tubulure (7), entre lesquels se trouve l'échangeur (5), et dans lesquels les tubulures (7) viennent se fixer par encliquetage de leur section.

2. Dispositif de chauffage mural (1) selon la revendication 1, **caractérisé en ce que** le socle (11) est fixé dans le corps creux (2) contre son fond (3), par une fixation décrochable (13) à base de boucles et crochets.

3. Dispositif de chauffage mural (1) selon la revendication 1 ou la revendication 2, **caractérisé en ce que** les tubulures (7) sont en contact, d'une part, avec l'échangeur (5), et, d'autre part, avec la façade (4).

4. Dispositif de chauffage mural (1) selon l'une quelconque des revendications 1 à 3 , **caractérisé en ce que** les tubulures (7) ont deux faces planes en vis-à-vis l'une de l'autre, l'une pour le contact avec l'échangeur (5), l'autre pour le contact avec la façade (4).

5. Dispositif de chauffage mural (1) selon l'une quelconque des revendications 1 à 4, **caractérisé en ce que** l'échangeur (5) prend la forme d'une feuille d'un seul tenant déformée pour créer une alternance d'ailettes (6) et de flancs (8) plats, lesdites ailettes (6) étant parallèles entre elles, séparées par lesdits flancs (8) qui leur sont perpendiculaires et qui s'étendent entre elles à leurs extrémités, les tubulures (7) venant contre certains des flancs (8).

6. Dispositif de chauffage mural (1) selon l'une quelconque des revendications 1 à 5, **caractérisé en ce qu'**il présente, à chaque extrémité des tubulures (7), des adaptateurs (10) pour le montage d'un flexible de raccordement, lesdits adaptateurs (10) étant montés à l'intérieur des tubulures (7).

7. Dispositif de chauffage mural (1) selon l'une quelconque des revendications 1 à 6, **caractérisé en ce que** la façade (4) est formée par une paroi à base métallique.

8. Dispositif de chauffage mural (1) selon l'une quelconque des revendications 1 à 7, **caractérisé en ce qu'**il présente, en outre, un module électrique (9) chauffant plat, positionné entre le fond (3) et l'échangeur (5), au contact de chacun d'eux.

9. Dispositif de chauffage mural (1) selon la revendication 8 prise en combinaison avec la revendication 2, **caractérisé en ce que** le module électrique (9) se trouve entre deux socles (11), lesdits socles (11) et le module électrique (9) étant fixés contre le fond (3).

## Patentansprüche

1. Vorrichtung (1) zur Wandbeheizung, welche eine längliche Form aufweist und eine beheizte Sockelleiste darstellt,
wobei die Vorrichtung einen Hohlraumkörper (2) umfasst, welcher einen Boden (3) aufweist, der dazu bestimmt ist, einerseits an der Wand anzuliegen, an der die Vorrichtung montiert ist, und andererseits gegenüber einer Fassade (4) angeordnet zu sein,
wobei die Vorrichtung außerdem einen Tauscher (5) mit Rippen (6) sowie zwei Rohren (7) für die Zirkulation von Heizflüssigkeit in jeweils einer Richtung umfasst,
wobei die Vorrichtung **dadurch gekennzeichnet ist, dass** sich die Rohre (7) zwischen dem Tauscher (5) und der Fassade (4) befinden, und dass diese außerdem mindestens ein Paar von Sockeln (11) zur Befestigung der Rohre (7) umfasst, zwischen denen sich der Tauscher (5) befindet, und in denen die Rohre (7) durch Einrasten ihres Querschnitts befestigt werden.

2. Vorrichtung (1) zur Wandbeheizung nach Anspruch 1,
**dadurch gekennzeichnet, dass**
der Sockel (11) im Hohlraumkörper (2) an dessen Boden (3) durch eine lösbare Befestigung (13) mit Hilfe eines Klettverschlusses befestigt ist.

3. Vorrichtung (1) zur Wandbeheizung nach Anspruch 1 oder 2,
**dadurch gekennzeichnet, dass**
die Rohre (7) einerseits mit dem Tauscher (5) und andererseits mit der Fassade (4) in Kontakt stehen.

4. Vorrichtung (1) zur Wandbeheizung nach einem der Ansprüche 1 bis 3,
**dadurch gekennzeichnet, dass**
die Rohre (7) zwei einander gegenüberliegende ebene Flächen aufweisen, eine für den Kontakt mit dem Tauscher (5), die andere für den Kontakt mit der Fassade (4).

5. Vorrichtung (1) zur Wandbeheizung nach einem der Ansprüche 1 bis 4,
**dadurch gekennzeichnet, dass**
der Tauscher (5) die Form einer einstückigen Platte aufweist, die verformt ist, um abwechselnd Rippen (6) und flache Seitenwände (8) zu bilden, wobei die Rippen (6) zueinander parallel sind, und durch die Seitenwände (8) getrennt sind, die rechtwinklig zu diesen sind und die sich zwischen diesen an ihren Enden erstrecken, wobei die Rohre (7) gegen bestimmte der Seitenwände (8) anliegen.

6. Vorrichtung (1) zur Wandbeheizung nach einem der Ansprüche 1 bis 5,
**dadurch gekennzeichnet, dass**
diese, an jedem Ende der Rohre (7), Adapter (10) für die Montage eines flexiblen Verbindungselements aufweist, wobei die Adapter (10) im Inneren der Rohre (7) montiert sind.

7. Vorrichtung (1) zur Wandbeheizung nach einem der Ansprüche 1 bis 6,
**dadurch gekennzeichnet, dass**
die Fassade (4) durch eine Wand auf Metallbasis gebildet ist.

8. Vorrichtung (1) zur Wandbeheizung nach einem der Ansprüche 1 bis 7,
**dadurch gekennzeichnet, dass**
diese ferner ein flaches, elektrisches Heizmodul (9) aufweist, das zwischen dem Boden (3) und dem Tauscher (5) positioniert ist und in Kontakt mit beiden steht.

9. Vorrichtung (1) zur Wandbeheizung nach Anspruch 8 in Kombination mit Anspruch 2,
**dadurch gekennzeichnet, dass**
sich das elektrische Modul (9) zwischen zwei Sockeln (11) befindet, wobei die Sockel (11) und das elektrische Modul (9) am Boden (3) befestigt sind.

## Claims

1. Wall heater device (1) of elongated shape and consisting of a heating baseboard,
said device comprising a hollow body (2) which has firstly a back (3) intended to rest against the wall on which the device is mounted, and secondly a front (4) located opposite it,
said device further comprising a heat exchanger (5) with fins (6) as well as two tubes (7) for circulating heating liquid in one direction each,
said device being **characterised in that** the tubes (7) are located between the heat exchanger (5) and the front (4) and that it further comprises at least one pair of frames (11) for fixing the tubes (7), between which the heat exchanger (5) is located and in which the tubes (7) are arranged to be fixed by clipping into their cross section.

2. Wall heater device (1) according to claim 1, **characterised in that** the frame (11) is fixed in the hollow body (2) against its back (3) by a detachable fastening (13) based on hooks and loops.

3. Wall heater device (1) according to claim 1 or to claim 2, **characterised in that** the tubes (7) are in contact firstly with the heat exchanger (5) and secondly with the front (4).

4. Wall heater device (1) according to any one of claims 1 to 3 , **characterised in that** the tubes (7) have two flat faces opposite each other, one to be in contact with the heat exchanger (5) and the other to be in contact with the front (4).

5. Wall heater device (1) according to any one of claims 1 to 4, **characterised in that** the heat exchanger (5) is in the shape of a one-piece sheet deformed to create alternating flat fins (6) and flanks (8), wherein said fins (6) are parallel with respect to each other and are separated by the said flanks (8) which are perpendicular to them and which extend between them to their extremities, wherein the tubes (7) are arranged against certain of the flanks (8).

6. Wall heater device (1) according to any one of claims 1 to 5, **characterised in that**, at each end of the tubes (7), it has adapters (10) for fitting a flexible connector, wherein said adapters (10) are mounted on the inside of the tubes (7).

7. Wall heater device (1) according to any one of claims 1 to 6, **characterised in that** the front (4) is formed by a metallic wall.

8. Wall heater device (1) according to any one of claims 1 to 7, **characterised in that** it also has a flat electrical heating module (9) positioned between the back (3) and the heat exchanger (5) in contact with each of them.

9. Wall heater device (1) according to claim 8 taken together with claim 2, **characterised in that** electrical module (9) is located between two frames (11), wherein said frames (11) and the electrical module (9) are fixed to the back (3).
